# EUROPEAN PATENT APPLICATION

(11) **EP 2 363 787 A2**
(43) Date of publication of application: **07.09.2011**
(21) Application number: 10005474.1
(22) Date of filing: 26.05.2010
(51) Int. Cl.: G06F 3/044

(54) **Single-layer capacitance touch device**

(30) Priority: 01.03.2010 TW 99105873
(71) Applicant: ETURBOTOUCH TECHNOLOGY INC., Taoyuan County (TW)
(72) Inventor: Wang, Kuei-Ching, Jhongli City Taoyuan County (TW); Lin, Hsing-Chiao, JhongLi City Taoyuan County (TW); Lin, Leng-Chieh, Yangmei Township Taoyuan County (TW); Tu, Ming-Tzu, Yangmei Township Taoyuan County (TW)
(74) Representative: Görz, Ingo

(57) **Abstract**

A capacitance touch device includes a touch panel (401), a plurality of triangular sensing pads (404), a plurality of conducting wires (402), and a control circuit (403). Every four triangular sensing pads (404) are arranged forming a square deposited on the touch panel (401). Each triangular sensing pad (404) is corresponding to a location and is electrically connected to the control circuit (403) through one conducting wire (402). When the plurality of triangular sensing pads (404) is touched generating sensing signals, the control circuit (403) can calculate the location of the touch point according to the intensity of the sensing signals.

## Description

The present invention relates to single-layer capacitance touch device according to the pre-characterizing clause of claim 1.

The capacitance touch device has the good durability and touch susceptibility, so it may replace the resistance touch device and become the next mainstream. However, the cost of the capacitance touch device is the main reason that the capacitance touch devices are only used in few consumption products.

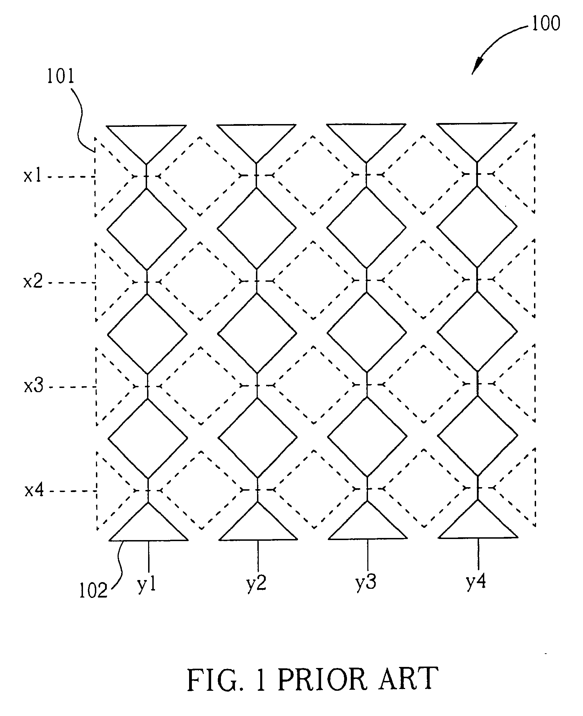

Please refer to FIG.1. FIG.1 is a schematic view of sensing pads of a projective capacitance touch (PCT) device according to the prior art. The PCT device 100 uses two conduction layers for the sensing pads, so that the control circuit can scan the sensing signals in two directions. The PCT device 100 includes a touch panel (not shown), using a glass substrate for example, a cover layer (not shown) formed on the glass substrate, Y-axis sensing pads 102 formed on the upper side of the glass substrate, and X-axis sensing pads 101 formed on the lower side of the glass substrate. The Y-axis sensing pads (y1,y2,y3,y4...) are separated by the fixed space. The X-axis sensing pads (x1,x2,x3,x4...) are orthogonal to the Y-axis sensing pads (y1,y2,y3,y4...) and separated by the fixed space. When the finger touches or approaches the cover layer, the capacitance variation of the X-axis sensing pad and Y-axis sensing pad at the touch point is detected by the control circuit to generate the coordinate data of the X-axis and Y-axis. The double-layer PCT device 100 has to form the X-axis sensing pads and Y-axis sensing pads on the lower side and upper side of the glass substrate respectively. In general, the transparent sensing pads are made of Indium-Tin-Oxide (ITO), so the cost is higher. To reduce the cost of the double-layer PCT device 100, the single-layer capacitance touch device is developed.

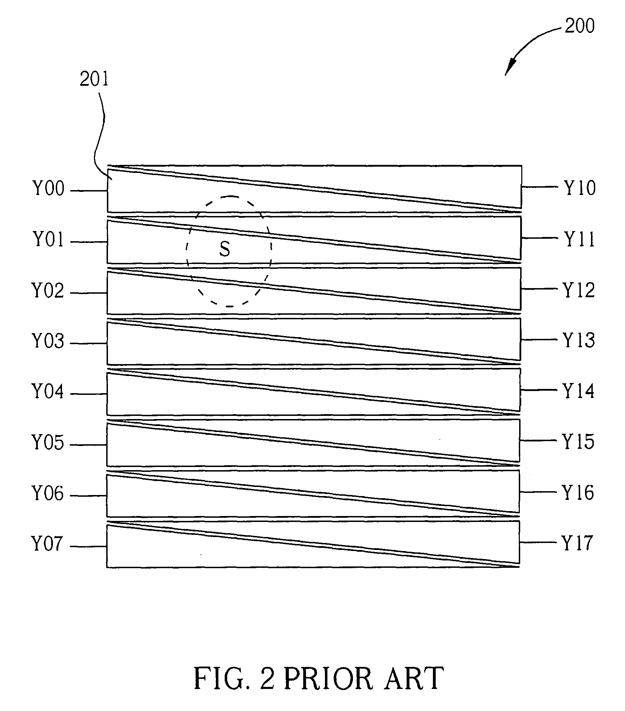

Please refer to FIG.2. FIG.2 is a schematic view of the single-layer capacitance touch device according to the prior art. The difference of the single-layer capacitance touch device 200 and the double-layer capacitance touch device 100 is that the single-layer capacitance touch device 100 forms the sensing pads only on one side of the glass substrate. There is a plurality of triangular sensing pads 201 formed along the Y-axis of the glass substrate and separated by the fixed space. Every two triangular sensing pads 201 are arranged symmetrically to form a long rectangle parallel to the X-axis. The plurality of triangular sensing pads is stacked along the Y-axis. In this way, the descending and ascending hypotenuses of the triangular sensing pads are arranged alternatively, so the capacitance variation of the X-axis can be detected and the coordinate data of X-axis of the touch point S can be calculated by interpolation. On the other hand, the coordinate data of Y-axis of the touch point S can be obtained by the location of the triangular sensing pad. The best advantage of the single-layer capacitance touch device is the reduction of cost.

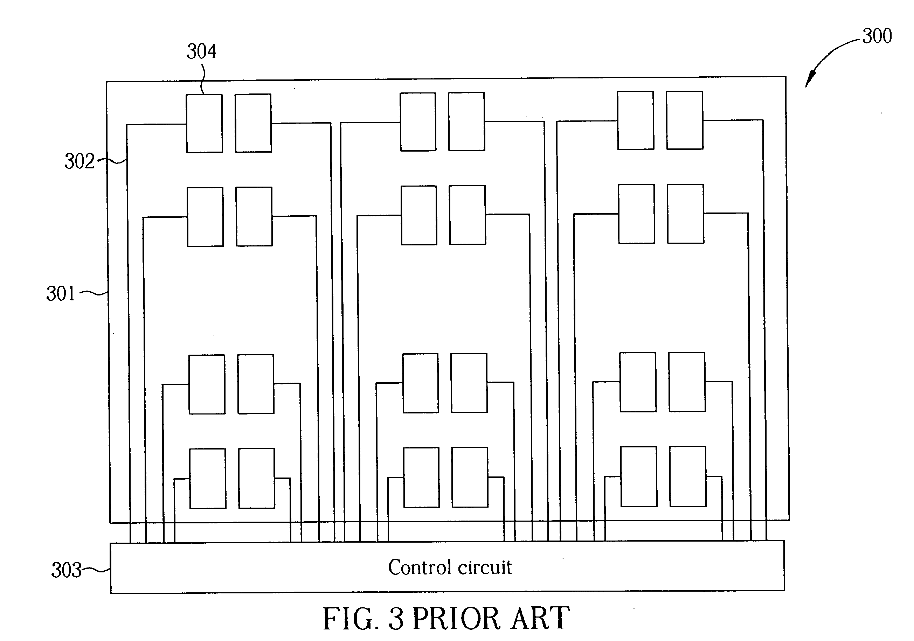

Please refer to FIG.3. FIG.3 is a schematic view of another single-layer capacitance touch device according to the prior art. The capacitance touch device 300 includes a touch panel 301 and a control circuit 303. The touch panel 301 includes a plurality of sensing pads 304 and a plurality of conducting wires 302. Each sensing pad 304 is electrically connected to the control circuit 303 through a conducting wire 302. When the sensing pads are touched generating sensing signals, the control circuit 303 can calculate a location of the touch point according to the intensity of the sensing signals. However, the adjacent sensing pads 304 can only generate the sensing signals in the X-axis or Y-axis because of the square sensing pads 304, so the sensitivity of the touch device 300 is low.

This in mind, the present invention aims at providing a single-layer capacitance touch device for overcoming these problems.

This is achieved by a flat-surface resistive touch panel according to claim 1. The dependent claims pertain to corresponding further developments and improvements.

As will be seen more clearly from the detailed description following below, the claimed single-layer capacitance touch device includes a touch panel, a plurality of sensing pads formed on the touch panel, each sensing pad having an edge being unparallel to the X-axis and Y-axis, a plurality of conducting wires, and a control circuit.

In the following, the invention is further illustrated by way of example, taking reference to the accompanying drawings. Thereof
FIG.1 is a schematic view of sensing pads of a projective capacitance touch (PCT) device according to the prior art.
FIG.2 is a schematic view of the single-layer capacitance touch device according to the prior art.
FIG.3 is a schematic view of another single-layer capacitance touch device according to the prior art.
FIG.4 is a schematic view of a first embodiment of a single-layer capacitance touch device according to the present invention.
FIG.5 is a cross-sectional view of the capacitance touch device according the present invention.
FIG.6 is a schematic view of a second embodiment of a single-layer capacitance touch device according to the present invention.
FIG.7 is a schematic view of a third embodiment of a single-layer capacitance touch device according to the present invention.

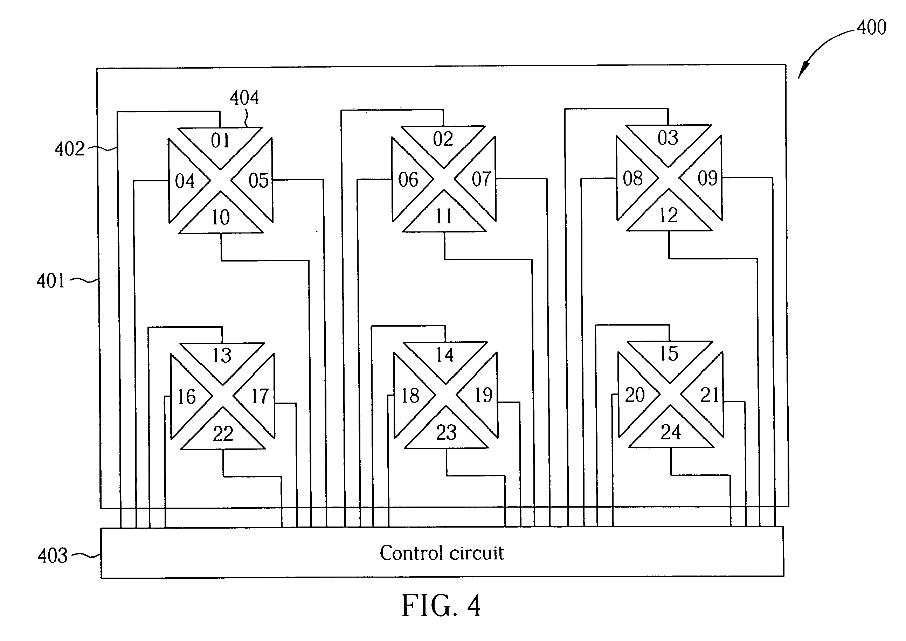

Please refer to FIG.4. FIG.4 is a schematic view of a first embodiment of a single-layer capacitance touch device according to the present invention. The single-layer capacitance touch device 400 comprises a touch panel 401 and a control circuit 403. The touch panel 401 comprises a plurality of sensing pads 404 and a plurality of conducting wires 402. The plurality of sensing pads 404 is electrically connected to the control circuit 403 through the plurality of conducting wires 402, and each conducting wire 402 is electrically connected to a sensing pad 404. When the sensing pads 404 are touched generating sensing signals, the touched sensing pads 404 transmit the sensing signals to the control circuit 403 through their own conducting wires 402 respectively. The control circuit 403 can calculate the location of the touch point according to the intensity of the sensing signals. The plurality of sensing pads 404 and the plurality of conducting wires 402 are formed on the same conduction layer. The conduction layer is made of transparent materials, comprising Indium-Tin-Oxide (ITO), Antimony-Tin-Oxide (ATO), Aluminum-Zinc-Oxide (AZO), or one selected from a group of metal oxide composed of Titanium, Zinc, Zirconium, Antimony, Indium, Tin, Aluminum and Silicon. In this embodiment, the sensing pads 01-24 are triangular, and every four triangular sensing pads 404 arranged forming a square. For example, the triangular sensing pads 01, 04, 05, and 10 form a square. Thus, two adjacent sensing pads 404 can generate the sensing signals easier in the X-axis and Y-axis. For example, the triangular sensing pads 01, 05 can generate sensing signals both in the X-axis and Y-axis. In addition, every four triangular sensing pads 404 arranged forming a square make the plurality of sensing pads 404 close on the touch panel 401.

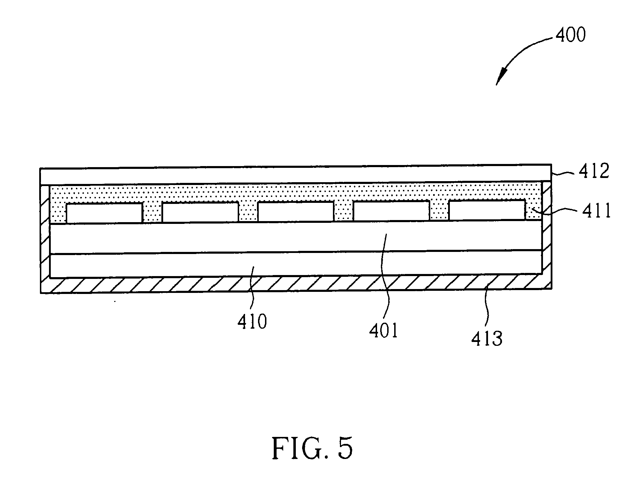

Please refer to FIG.5. FIG.5 is a cross-sectional view of the capacitance touch device according the present invention. The capacitance touch device 400 comprises a touch panel 401, a display panel 410, a decoration film 412, and a frame 413. The touch panel 101 is bonded to the display panel 410 with the double-side adhesive tape or optical clear adhesive (OCA). The double-side adhesive tape is applied around the edge of the touch panel 401 and the display panel 410, but the OCA is applied on the full surface between the touch panel 401 and the display panel 410. The touch panel 401 and the display panel 410 are installed in the frame 413. The frame is made of opaque materials. The decoration film 412 comprises a top surface, a base material, and a bottom surface. The top surface of the decoration film 412 is made of the transparent acrylics or the material of epoxy resin. The top surface of the decoration film 412 forms a flat surface with the frame 413. The base material of the decoration film 412 is made of the material of poly carbonate (PC), arton, polyether surlfone (PES), zeonor, tri-acetyl Cellulose (TAC), polyethylene terephthalate (PET), or polymethyl methacrylate (PMMA). The bottom surface of the decoration film 412 is made of the transparent acrylics or the material of epoxy resin. The bottom surface of the decoration film 412 is bonded with the touch panel 401 by OCA. The bottom surface of the decoration film 412 has decoration patterns. The decoration patterns are formed by means of dip coating, gravure/relief coating, sputtering, thermal evaporation, chemical vapor deposition, screen printing, or pad printing. The decoration patterns can be color patterns. Generally speaking, since the frame is higher than the touch panel, the edge of the conventional touch panel cannot be extended to the outside flatly, the touch-operation on the edge of the conventional touch panel is not convenient. Therefore, the touch panel 401 uses the decoration film 412 to form a flat-surface with the frame 413, so the touch-operation on the edge of the touch panel 401 is easy for the user.

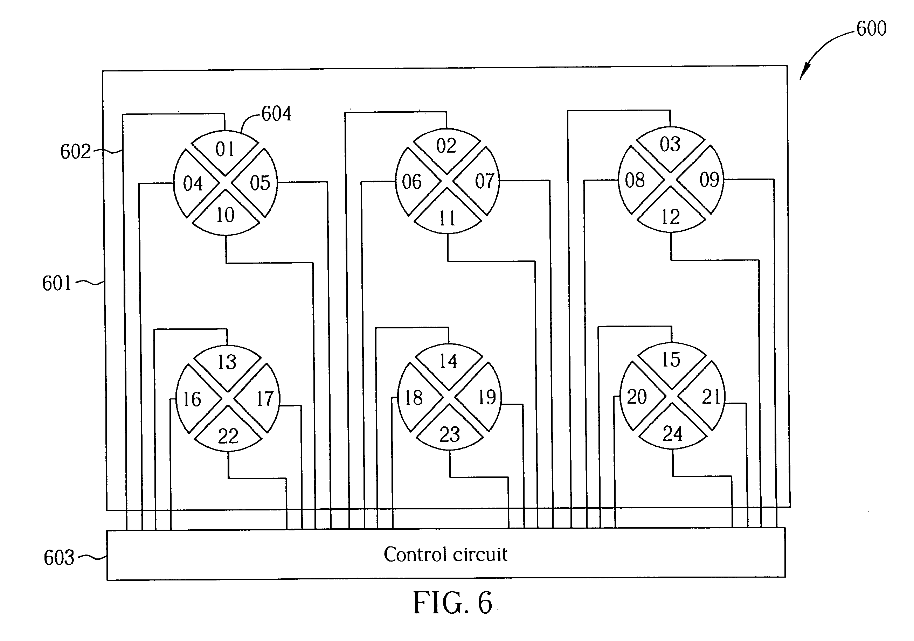

Please refer to FIG.6. FIG.6 is a schematic view of a second embodiment of a single-layer capacitance touch device according to the present invention. The single-layer capacitance touch device comprises a touch panel 601 and a control circuit 603. The touch panel 601 comprises a plurality of sensing pads 604 and a plurality of conducting wires 602. When the sensing pads 604 are touched generating sensing signals, the touched sensing pads 604 transmit the sensing signals to the control circuit 603 through their own conducting wires 602 respectively. The control circuit 403 can calculate the location of the touch point according to the intensity of the sensing signals. In this embodiment, the sensing pads 01-24 are fan-shaped, and very four fan-shaped sensing pads 604 are arranged forming a circle. For example, the fan-shaped sensing pads 01, 04, 05, and 10 form a circle. Thus, two adjacent sensing pads 604 can generate the sensing signals easier in the X-axis and Y-axis so as to improve the sensitivity of the touch panel 601. For example, the fan-shaped sensing pads 01, 05 can generate sensing signals both in the X-axis and Y-axis.

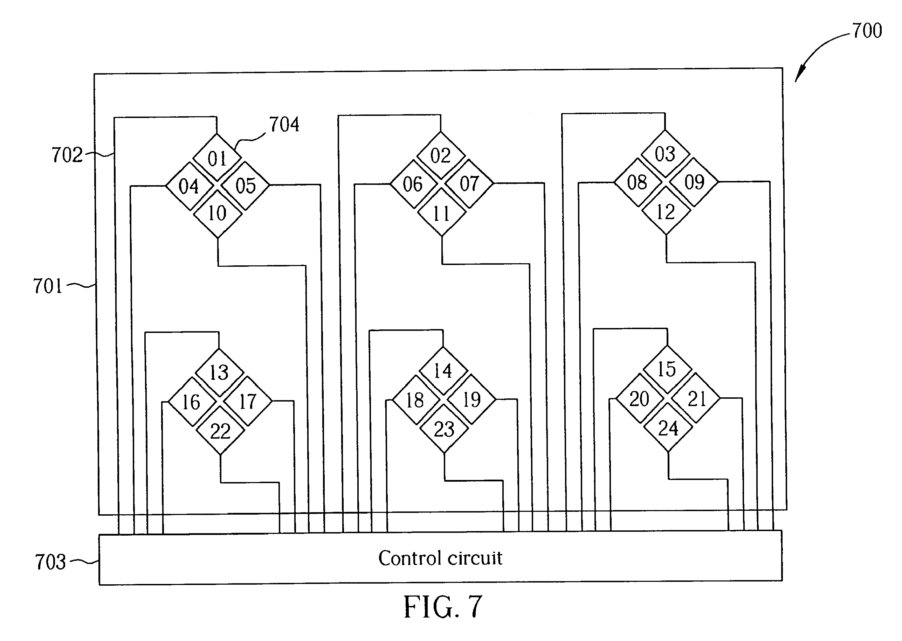

Please refer to FIG.7. FIG.7 is a schematic view of a third embodiment of a single-layer capacitance touch device according to the present invention. The single-layer capacitance touch device comprises a touch panel 701 and a control circuit 703. The touch panel 701 comprises a plurality of sensing pads 704 and a plurality of conducting wires 702. When the sensing pads 704 are touched generating sensing signals, the touched sensing pads 704 transmit the sensing signals to the control circuit 703 through their own conducting wires 702 respectively. The control circuit 403 can calculate the location of the touch point according to the intensity of the sensing signals. In this embodiment, the sensing pads 01-24 are rhombic, and very four rhombic sensing pads 704 are arranged forming a rhombus. For example, the rhombic sensing pads 01, 04, 05, and 10 form a rhombus. Thus, two adjacent sensing pads 704 can generate the sensing signals easier in the X-axis and Y-axis so as to improve the sensitivity of the touch panel 701. For example, the rhombic sensing pads 01, 05 can generate sensing signals both in the X-axis and Y-axis.

In conclusion, the single-layer capacitance touch device according to the present invention improves the sensitivity of the touch panel. The capacitance touch device of the present invention comprises a touch panel, a plurality of sensing pads, a plurality of conducting wires, and a control circuit. Each sensing pad is electrically connected to the control circuit through one conducting wire. Each sensing pad has an edge being unparallel to the X-axis and Y-axis for improving the sensitivity. In the embodiment of the present invention, the triangular sensing pads, fan-shaped sensing pads, and rhombic sensing pads are illustrated. Particularly, every four triangular sensing pads arranged forming a square make the plurality of sensing pads close on the touch panel. In addition, the capacitance touch device of the present invention further comprises a decoration film and a frame. The decoration film is bonded with the touch panel by OCA forming a flat-surface with the frame. The flat-surface makes the touch-operation of the capacitance touch device easy.

For completeness, various aspects of the invention are set out in the following numbered clauses:
Clause 1: A single-layer capacitance touch device comprising:
   a touch panel;
   a plurality of sensing pads, formed on the touch panel, each sensing pad having an edge being unparallel to the X-axis and Y-axis;
   a plurality of conducting wires, each conducting wire electrically connected to a sensing pad; and
   a control circuit, electrically connected to the plurality of conducting wires, for calculating a location of a touch point according to the intensity of the sensing signals when the plurality of sensing pads is touched.
Clause 2: The touch device of claim 1, wherein the plurality of sensing pads and the plurality of conducting wires are made of transparent materials, the transparent materials comprising Indium-Tin-Oxide (ITO), Antimony-Tin-Oxide (ATO), Aluminum-Zinc-Oxide (AZO), or one selected from a group of metal oxide composed of Titanium, Zinc, Zirconium, Antimony, Indium, Tin, Aluminum and Silicon.
Clause 3: The touch device of claim 1, further comprising a decoration film bonded to the touch panel with the optical clear adhesive (OCA).
Clause 4: The touch device of claim 3, further comprising a frame,
   wherein the decoration film and the frame form a flat surface.
Clause 5: The touch device of claim 1, wherein the plurality of sensing pads are triangular sensing pads, and every four triangular sensing pads are arranged forming a square.
Clause 6: The touch device of claim 1, wherein the plurality of sensing pads are fan-shaped sensing pads, and every four fan-shaped sensing pads are arranged forming a circle.
Clause 7: The touch device of claim 1, wherein the plurality of sensing pads are rhombic sensing pads, and every four rhombic sensing pads are arranged forming a rhombus.
Clause 8: A single-layer capacitance touch device comprising:
   a touch panel;
   a plurality of triangular sensing pads, formed on the touch panel, every four triangular sensing pads arranged forming a square so as to make the plurality of triangular sensing pads close;
   a plurality of conducting wires, each conducting wire electrically connected to a triangular sensing pad; and
   a control circuit, electrically connected to the plurality of conducting wires, for calculating a location of a touch point according to the intensity of the sensing signals when the plurality of triangular sensing pads is touched.
Clause 9: The touch device of claim 8, wherein the plurality of triangular sensing pads and the plurality of conducting wires are made of transparent materials, the transparent materials comprising Indium-Tin-Oxide (ITO), Antimony-Tin-Oxide (ATO), Aluminum-Zinc-Oxide (AZO), or one selected from a group of metal oxide composed of Titanium, Zinc, Zirconium, Antimony, Indium, Tin, Aluminum and Silicon.
Clause 10: The touch device of claim 8, further comprising a decoration film bonded to the touch panel with the optical clear adhesive (OCA).
Clause 11: The touch device of claim 10, further comprising a frame, wherein the decoration film and the frame form a flat surface.

All combinations and sub-combinations of the above-described features also belong to the invention.

## Claims

1. A single-layer capacitance touch device (400, 600, 700) comprising:
a touch panel (401, 601, 701);
a plurality of sensing pads (404, 604, 704), formed on the touch panel (401, 601, 701);
a plurality of conducting wires (402, 602, 702), each conducting wire electrically connected to a sensing pad (404, 604, 704);
a control circuit (403, 603, 703), electrically connected to the plurality of conducting wires (402, 602, 702), for calculating a location of a touch point according to the intensity of the sensing signals when the plurality of sensing pads (404, 604, 704) is touched; and
**characterized by**:
each sensing pad (404, 604, 704) having an edge being unparallel to the X-axis and Y-axis.

2. The touch device of claim 1, **characterized in that** the plurality of sensing pads (404, 604, 704) and the plurality of conducting wires (402, 602, 702) are made of transparent materials, the transparent materials comprising Indium-Tin-Oxide (ITO), Antimony-Tin-Oxide (ATO), Aluminum-Zinc-Oxide (AZO), or one selected from a group of metal oxide composed of Titanium, Zinc, Zirconium, Antimony, Indium, Tin, Aluminum and Silicon.

3. The touch device of claim 1 or 2, further **characterized by** a decoration film (412) bonded to the touch panel with the optical clear adhesive (OCA).

4. The touch device of claim 3, further **characterized by** a frame (413), **characterized in that** the decoration film (412) and the frame (413) form a flat surface.

5. The touch device of any one of claims 1 to 4, **characterized in that** the plurality of sensing pads (404) are triangular sensing pads, and every four triangular sensing pads are arranged forming a square.

6. The touch device of any one of claims 1 to 4, **characterized in that** the plurality of sensing pads (604) are fan-shaped sensing pads, and every four fan-shaped sensing pads are arranged forming a circle.

7. The touch device of any one of claims 1 to 4, **characterized in that** the plurality of sensing pads (704) are rhombic sensing pads, and every four rhombic sensing pads are arranged forming a rhombus.
